(19) **Europäisches Patentamt**

**European Patent Office**

**Office européen des brevets**

(11) **EP 0 728 409 B1**

(12) **EUROPÄISCHE PATENTSCHRIFT**

(45) Veröffentlichungstag und Bekanntmachung des Hinweises auf die Patenterteilung:
**24.05.2000 Patentblatt 2000/21**

(51) Int Cl.$^7$: **A01D 41/12**

(21) Anmeldenummer: **96101087.3**

(22) Anmeldetag: **26.01.1996**

(54) **Verfahren zur automatischen Regelung wenigstens eines Abschnitts der Gutbearbeitung in einer Erntemaschine**

Method for automatic adjustment of at least one step of crop treatment in a harvester

Procédé pour le réglage automatique d'au moins une étape du traitement de récolte dans une moissonneuse

(84) Benannte Vertragsstaaten:
**BE DE DK FR GB IT**

(30) Priorität: **22.02.1995 DE 19506059**

(43) Veröffentlichungstag der Anmeldung:
**28.08.1996 Patentblatt 1996/35**

(73) Patentinhaber: **DEERE & COMPANY**
**Moline, Illinois 61265-8098 (US)**

(72) Erfinder:
• **Herlitzius, Thomas**
  **D-66503 Dellfeld (DE)**

• **Bischoff, Lutz**
  **D-66503 Dellfeld (DE)**

(74) Vertreter: **Feldmann, Bernhard et al**
**DEERE & COMPANY**
**European Office**
**Patent Department**
**68140 Mannheim (DE)**

(56) Entgegenhaltungen:
**DE-A- 2 753 505          DE-C- 4 425 453**
**US-A- 4 259 829**

**Beschreibung**

Die Erfindung betrifft ein Verfahren zur automatischen Regelung wenigstens eines Abschnitts der Gutbearbeitung in einer Erntemaschine.

In der heutigen Zeit sind von Lohnunternehmern eingesetzte Mähdrescher zu einer extrem hohen theoretischen Erntekapazität fähig. Diese Erntekapazität kann jedoch nur erreicht werden, wenn ein derartiger Mähdrescher optimal eingestellt ist, d. h. wenn insbesondere die Sieböffnung, die Gebläseleistung, der Ausdruschgrad u.s.w. zu einem größtmöglichen Ausdreschen von Körnern aus den Ähren, einem geringstmöglichen Spreu- und Kurzstrohanfall, einem geringstmöglichen Kornverlust, einer höchstmöglichen Kornreinheit und nicht zerstörten Körnern führen. Da diese Einstellungen von der jeweiligen Fruchtart und Fruchtbeschaffenheit, den Einsatzbedingungen des Mähdreschers und anderen Faktoren abhängen, gibt es keine einzig richtige Einstellung, sondern eine unendliche Vielfalt von Einstellungskombinationen, von denen jeweils die richtige zu finden ist. Es ist offensichtlich, daß eine Bedienungsperson nicht in der Lage ist, diesen Einstellvorgang immer optimal und rechtzeitig zu vollziehen.

Es ist daher bekannt, (EP-B1-0 339 141, EP-B1-0 339 140, DE-C2-29 03 910) Einstellungen an Mähdreschern automatisch vorzunehmen. Hierzu wird regelmäßig in relativen oder absoluten Größen mittels Verlustsensoren festgestellt, wieviel Korn von der Trenn- und/oder der Reinigungsvorrichtung aus dem Mähdrescher auf den Boden abgegeben wird, um abhängig davon beispielsweise den Gutstromverlauf über die Reinigung, die Gebläseleistung, den Gesamtmaschinendurchsatz und dergleichen zu verändern. Gemäß der US-4,360,998 wird der Verlust anstatt mittels Verlustsensoren aus einer über das Siebende hinaus extrapolierten Funktion aus dem Abscheideverhalten des Körnersiebs berechnet.

Nach diesen bekannten Methoden und Vorrichtungen kommt es demnach stets auf die Feststellung eines Kornverlusts an. Der Kornverlust ist jedoch sowohl relativ als auch objektiv schwer feststellbar, weil die ermittelten Werte die tatsächlichen Verluste nur in einem Teilbereich zutreffend wiedergeben. Genauso nachteilig wirkt es sich aus, daß nach einem derartigen Verfahren der Regelvorgang erst zum letztmöglichen Zeitpunkt einsetzt, nämlich dann, wenn der Trenn- und Reinigungsvorgang beendet ist. Zu diesem Zeitpunkt können auf den Sieben bereits ganz andere Zustände herrschen, für die die aus dem Kornverlust ermittelten Werte nicht mehr repräsentativ sind.

Ein weiteres Problem bei der Bildung von absoluten Massedaten ist, daß das Meßsystem zunächst kalibriert werden muß, bevor eine Umrechnung in die tatsächliche Masse möglich ist.

Das der Erfindung zugrundeliegende Problem wird darin gesehen, ein automatisches Regelverfahren zu finden, mit dessen Hilfe eine Abscheidevorrichtung auch ohne Ermittlung eines Kornverlusts frühzeitig optimal eingestellt bzw. betrieben werden kann.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise werden nur Prozeßkenngrößen gemessen, die ohne eine Umrechnung in eine Masse eine Aussage über die Qualität der ablaufenden Verarbeitungsvorgänge zulassen. Bei dem erfindungsgemäßen Verfahren ist es nicht erforderlich, die tatsächlich, z. B. durch das Kurzstrohsieb oder Körnersieb, hindurchtretende Masse zu ermitteln, sondern es reicht das Verhältnis unter den Meßgrößen an verschiedenen Meßstellen. Bedeutend ist allerdings, daß Meßwerte im wesentlichen über den gesamten Stoffstrom abgetastet werden. Da nur die Signalgrößen der auf dem Stoffstromweg verteilten Sensoren unter sich verglichen werden, spielen auch Einflüsse wie Feuchtigkeit, Korngröße, Reinheitsgrad und dergleichen keine Rolle, denn diese liegen bei allen Sensoren in gleicher Weise vor und heben sich somit gegenseitig auf. Letztlich stehen nach der Werteermittlung zur Bewertung des Funktionsvollzugs der Arbeitsorgane Abscheidewerte im Zusammenhang zu den Koordinaten der Abscheidefläche zur Verfügung. Mit diesen Abscheidewerten werden ausgeglichene oder approximierte Funktionen berechnet, wozu die Meßwerte Stützstellen liefern. Die ein- oder mehrmalige Differenzierung der Funktionen nach einer Achse der Abscheidefläche oder nach der Zeit ergibt bewertbare Aussagen über den zeitlichen und örtlichen Verlauf der Abscheidung. Durch die Differentiation wird die Funktionsform herausgestellt und der Einfluß von Konstanten oder Koeffizienten niederer Ordnung wird eliminiert. Die Funktionsform weist charakteristische Merkmale auf, wie z. B. die Orte der lokalen Extremwerte, den Anstieg im Intervall der Länge oder der Zeit, die Wendepunkte und die Bogenlänge. Wird der optimalen, d. h. idealen Abscheidefunktion die jeweils ermittelte Ist-Abscheidefunktion gegenüber gestellt, können aus der Bewertung der gegebenenfalls vorhandenen Abweichung Informationen und Stellgrößen abgeleitet werden, die in der Lage sind, die Ist-Funktionsform in einem oder mehreren Merkmalen zu optimieren. Durch Korrelation der zeitlichen Signalverläufe der Abscheideorgane untereinander ist eine Berechnung der aktuellen Laufzeit der Masseströme zwischen den einzelnen Arbeitsorganen möglich. Derartige Abscheidefunktionen können sowohl für die Stoffströme unter den Schüttlern, wie auch unter den Sieben und unter dem Dreschkorb ermittelt werden.

Unter der Abscheidevorrichtung sind nicht nur Siebe, oder ein Siebkasten zu verstehen; vielmehr können darunter auch Schüttler fallen, die über Dreschwerk oder Durchsatz zu beeinflussen sind.

In der Zeichnung ist ein nachfolgend näher beschriebenes Ausführungsbeispiel der Erfindung dargestellt. Es zeigt:

Fig. 1     eine nach dem erfindungsgemäßen Verfahren betriebene Erntemaschine,

Fig. 2     eine Abscheidevorrichtung der Erntemaschine in schematischer Darstellung und in Seitenansicht mit mehreren Sensoren,

Fig. 3     eine graphische Darstellung eines Ideal-Funktionsverlaufs der Abscheidemenge über dem Gutweg und

Fig. 4     eine weitere graphische Darstellung eines Ideal-Funktionsverlaufs mit Summenfunktionsverlauf.

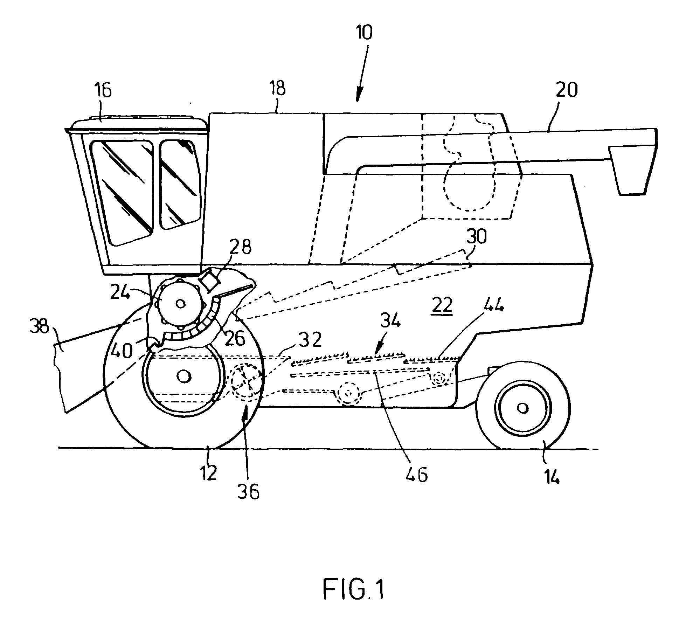

Eine in Figur 1 gezeigte Erntemaschine 10, in der Form eines Mähdreschers, ist auf vorderen angetriebenen und rückwärtigen lenkbaren Rädern 12 bzw. 14 getragen und weist eine Fahrerkabine 16 auf, von der aus sie von einem Fahrer bedient werden kann. Anstatt eines Mähdreschers könnte ebenso eine stationäre Dreschmaschine, eine Versuchs-Dreschanlage oder dergleichen in Frage kommen. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30, sowie auf einem Vorbereitungsboden 32 und einer von Sieben gebildeten Abscheidevorrichtung 34 wird eine weitere Trennung des geernteten Guts durchgeführt, wobei schließlich der ausgedroschene Gutanteil in den Korntank 18 gefördert wird, die großen Erntegutteile über die Schüttler 30 auf den Boden abgelegt werden und leichte Bestandteile mittels eines Gebläses 36 von der Abscheidevorrichtung 34 ebenfalls auf den Boden geblasen werden. Auf dem Boden liegendes oder stehendes Gut wird über einen Schrägförderer 38 und eine Steinfangmulde 40 der Dreschtrommel 24 zugeführt, nachdem es von einer nicht gezeigten Erntegutbergungsvorrichtung vom Boden aufgenommen worden ist.

Anstatt einer Erntemaschine 10 in der Art des dargestellten konventionellen Mähdreschers kann auch ein Mähdrescher nach der Axialflußbauart oder einer anderen insbesondere kombinierten Bauart als Regelgegenstand verwendet werden.

Eine derartige Erntemaschine 10 ist mit nicht gezeigten Stellvorrichtungen für die Einstellung des Dreschspalts zwischen Dreschkorb 26 und Dreschtrommel 24, der Umfangsgeschwindigkeit der Dreschtrommel 24, der Öffnungsweite der Siebe in der Abscheidevorrichtung 34 und der von dem Gebläse 36 gelieferten Luftmenge versehen. Diese Stellvorrichtungen sind soweit erforderlich mit elektrisch ansteuerbaren Stellmotoren versehen und dienen dazu, die Erntemaschine 10 optimal zu betreiben. Unter einem optimalen Betrieb ist eine Einstellung der Erntemaschine 10 zu verstehen, bei der das aufgenommene Getreide derart in seine Einzelteile (Körner, Stroh, Ähren) zerlegt und getrennt wird, daß unter Beachtung einer größtmöglichen Flächenleistung ein Höchstmaß an Körnern gewonnen wird. Um diesen optimalen Betrieb zu erreichen, muß je nach Gutsorte, Gutbeschaffenheit, Verunreinigungsgrad, Fahrgeschwindigkeit, Hangneigung und anderen Faktoren eine bestimmte Beziehung zwischen der mechanischen Einwirkung auf das Gut (Ausdreschen), der Siebweite und der Gebläsemenge eingehalten werden. Da sich die vorgenannten Bedingungen auch auf einem einzigen Feld oftmals ändern können, ist es erforderlich, die jeweiligen Einstellungen den jeweiligen Umständen anzupassen. Da die Luftmenge und ursächlich dafür die Drehzahl des Gebläses 36 einen wesentlichen Faktor für eine hohe Gutreinheit einerseits und geringe Kornverluste andererseits darstellt, befaßt sich dieses Ausführungsbeispiel mit einer Änderung der Drehzahl des Gebläses 36. Hierzu ist auf nicht gezeigte Weise der Antrieb des Gebläses 36 mit einem stufenlos verstellbaren Riemenvariator versehen, der über einen Elektromotor verstellt wird.

Im folgenden wird ein erfindungsgemäßes Verfahren beschrieben, mit dessen Hilfe ein Stellsignal für den Antrieb des Gebläses 36 gebildet wird. Dieses Verfahren hat zum Ziel, die Drehzahl des Gebläses 36 derart einzustellen, daß die auf der Abscheidevorrichtung 34 befindliche Gutmatte eine optimale Trennung in Körner für den Korntank und Spreu für die Ablage auf den Boden erfährt, wobei ein hoher Reinheitsgrad und geringe Kornverluste zu erzielen sind.

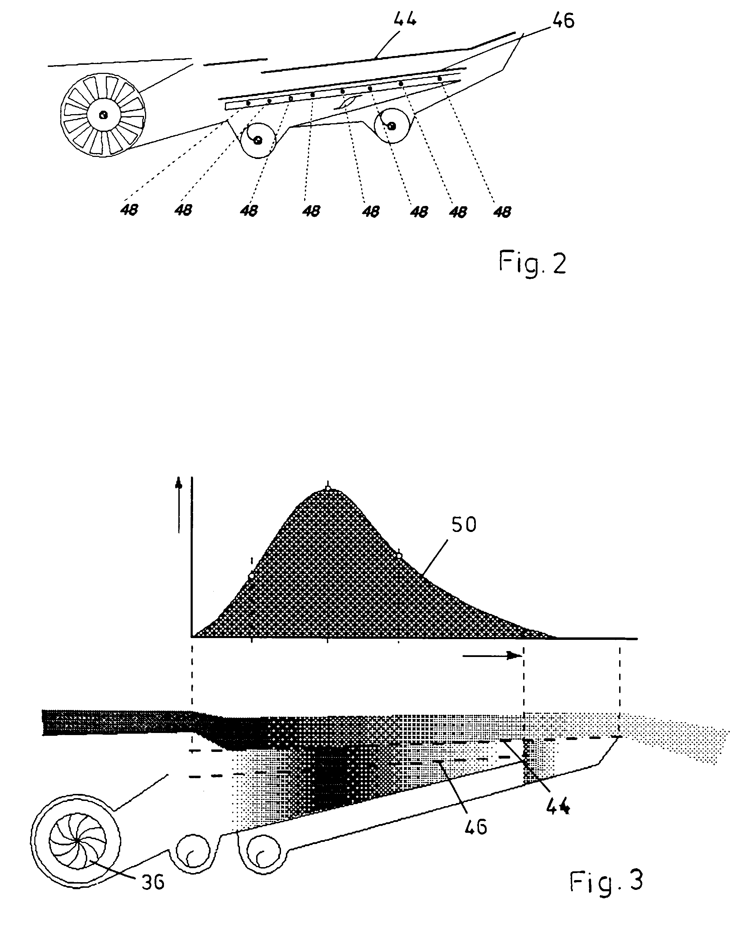

Zur Durchführung des Verfahrens sind gemäß Figur 2 unterhalb eines von einem Kurzstrohsieb 44 überlagerten Körnersiebs 46 Sensoren 48, z. B. in einer Stabbauweise derart angeordnet, daß sie Signale bilden, die der Menge des durch Öffnungen zwischen nicht näher bezeichneten Lamellen oder Löchern des Körnersiebs 46 hindurchfallenden Guts entsprechen. Hierzu sind in der Materialflußrichtung wenigstens zwei, vorzugsweise aber eine Vielzahl von Sensoren 48 angeordnet, die vorteilhafterweise einen wesentlichen Teil der Breite des Materialflusses erfassen. Diese an sich bekannten Sensoren 48 sind in ebenfalls bekannter Weise mittels Kabeln oder über Funk an wenigstens einen Rechner angeschlossen.

Abweichend von oder zusätzlich zu diesem Ausführungsbeispiel können derartige oder ähnliche Sensoren 48 auch an anderen Stellen, die dem Materialfluß unterliegen, z. B. unter dem Dreschkorb 26 und/oder unter den Schüttlern 30 vorgesehen werden.

Neben diesen Sensoren 48 zur Erfassung der durch das Körnersieb 46 abgeschiedenen Gutmenge, die in einer Abhängigkeit zu der von dem Gebläse 36 geförderten Luftmenge und der Öffnungsweite bzw. dem Durchlaßquerschnitt des Körnersiebs 46, d. h. dem Abstand zwischen dessen Lamellen steht, können in bekannter Weise zur Erstellung eines Ideal-Funktionsverlaufs 50 sogenannter Körnerverlustsensoren am Ende der Abscheidevorrichtung 34 vorgesehen sein, die ein qualitatives Signal für die Menge des die Erntemaschine 10 auf den Boden verlassenden Korns liefern. Es wird jedoch darauf hingewiesen, daß die Erfindung nicht die Ermittlung eines Kornverlusts zum Ziel hat, sondern daß die Körnerverlustsensoren bei der Erstellung des Ideal-Funktionsverlaufs das Auffinden einer optimalen Einstellung erleichtern soll. Zum Betrieb der Erntemaschine 10 nach dem erfindungsgemäßen Verfahren sind Kornverlustsensoren nicht erforderlich, sobald der Ideal-Funktionsverlauf 50 feststeht.

Ferner kann zur erstmaligen Erstellung einer benötigten Meßwertreihe der Anteil der sogenannten Überkehr erfaßt werden. Außerdem kann zur exakten Kornverlustermittlung ein Auszählen und Abwiegen der auf dem Boden befindlichen Körner erfolgen, was zusätzlich oder anstatt der Bewertung durch die Kornverlustsensoren vorgenommen werden kann.

Nachdem die Sensoren 48 eingebaut und an einen entsprechenden Rechner angeschlossen sind, wird der Mähdrescher 10 in Drescheinsatz gebracht.

Während des Drescheinsatzes werden unter Wahrung einer optimalen Einstellung eine Vielzahl von Meßwertreihen aus den Signalen der Sensoren 48 gebildet, und so eine Relation der das Körnersieb passierenden Körnermenge zu deren Verlauf über die Sieblänge erstellt, die graphisch wie in Figur 3 dargestellt aussehen könnte. Aus Figur 3 ist ersichtlich, daß sich der Kurvenverlauf, der eine graphische Darstellung des Ideal-Funktionsverlaufs 50 ist, aus einer Vielzahl von Stützstellen ergibt, die jeweils einen Meßwert einer Vielzahl von Sensoren 48 darstellt. Diese Relation läßt sich in einem mathematischen Ideal-Funktionsverlauf 50 ausdrücken und kennzeichnet sich durch eine unter allen Erntebedingungen gleiche Funktionscharakteristik mit einer bestimmten Lage der Wendepunkte, einer bestimmten Neigung und einer bestimmten Lage des Maximums aus.

Zur besseren Handhabung dieses Ideal-Funktionsverlaufs 50 wird zu dieser ein Summenfunktionsverlauf 52 erstellt, der mit der Formel

$$Y = A * e^{\left(B * e^{(C * x)}\right)}$$

beschrieben werden kann.

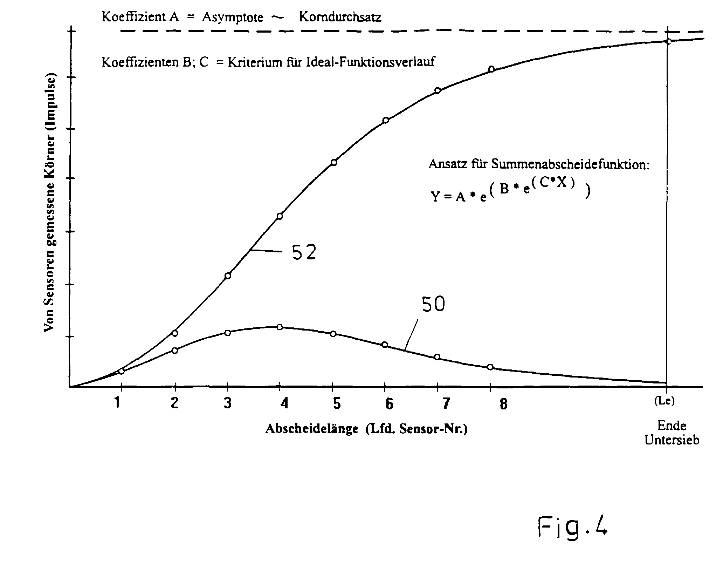

In Figur 4 ist der Ideal-Funktionsverlauf 50 durch die dazugehörige ideale untere Kurve und der Summenfunktionsverlauf 52 durch die obere ansteigende Kurve zu ersehen, wobei der Ideal-Funktionsverlauf 50 eine Ideal-Abscheidefunktion und der Summenfunktionsverlauf 52 eine Summenabscheidefunktion darstellt.

In diesem Summenfunktionsverlauf 52, dessen Erstellung nicht erforderlich sondern für die weitere Verarbeitung nur vorteilhaft ist, steht:

Y     für die erfaßte Menge durch das Körnersieb 46 abgeschiedenen Kornguts;

X     für die Abscheidelänge, d. h. den Weg, den das Gut auf der Abscheidevorrichtung 34, insbesondere auf dem Körnersieb zurücklegt;

A     für einen Koeffizienten, der einen Bezug zu dem gesamten Durchsatz an Korn durch die Erntemaschine 10 besitzt, und

B, C     für Koeffizienten, die einen Bezug zu der Drehzahl und somit der Fördermenge des Gebläses 36 besitzen.

Nach dem typischen Ideal-Funktionsverlauf 50 bzw. dessen graphischer Darstellung als Kurve hat dieser sein Maximum ungefähr beim Übergang vom ersten zu dem zweiten Drittel und läuft im dritten Drittel flach aus. Bei dem Summenfunktionsverlauf 52 ist dieser Bereich durch den größten Anstieg charakterisiert. Bei einer Erhöhung des gesamten Massedurchsatzes, der sich in einer Änderung des Koeffizienten A ausdrückt, verändert sich nicht der charakteristische Verlauf der Funktion, sondern lediglich deren Lage im Diagramm.

Es wird darauf hingewiesen, daß der so erfaßte Ideal-Funktionsverlauf für Erntemaschinen gleicher Bauart gilt, während für Erntemaschinen anderer Bauart andere Ideal-Funktionsverläufe gelten.

Vorzugsweise wird die Bestimmung der Koeffizienten des Summenfunktionsverlaufs 52 aus einer gemessenen Stoffverteilung in einem Computerprogramm als Algorithmus einprogrammiert, und das Computerprogramm wird einem Rechner eingegeben. Wenn es auch möglich ist, den Algorithmus hardwaremäßig zu integrieren, wird bei dem vorliegenden Ausführungsbeispiel eine Softwarelösung vorgezogen, weil diese sich leichter warten läßt und für künftige Einsatzverhältnisse flexibler ist. Der Rechner ist als Kleinrechner im Bereich der Fahrerkabine 16 angebracht. Allerdings ist es auch möglich, die entsprechenden Daten drahtlos, d. h. per Funk, auf einen fernen Rechner zu übertragen, der lediglich von der Fahrerkabine 16 aus bedient werden kann.

Dem Rechner ist eine Bedienungseinheit zugeordnet, mit der bestimmte Sollwerte, aus denen Führungsgrößen abgeleitet werden, z. B. zulässiger Kornverlust, Regelgrenzwerte, Durchsatzvolumen, Fahrgeschwindigkeit und dergleichen beeinflußt werden können. Zulässige Größen sind in der Regel die von außen einstellbaren und Sollwerte darstellenden Größen.

Der Rechner ist eingangsseitig an die Sensoren 48 angeschlossen und nimmt somit die sich aus der Menge der durch das Körnersieb 46 abgeschiedenen Körner ergebenden Signale an, wobei deren Digitalisierung innerhalb oder außerhalb des Rechners erfolgen kann. Als Rechner wird vorzugsweise ein programmierbarer Kleinrechner verwendet. Allerdings kann statt dessen auch ein einfaches übliches analog oder digital wirkendes Summierglied oder dergleichen verwendet werden. Bei verteilten Meßwerterfassungssystemen kann anstatt eines einziges Rechners auch eine Master-Slave-Rechnerkombination verwendet werden.

Der Rechner, gegebenenfalls der Master-Rechner, hat einen zu dem Antrieb des Gebläses 36 führenden Stellausgang und ist somit in der Lage, mittels eines entsprechenden Ausgangssignals die Drehzahl des Gebläses 36 zu erhöhen oder zu reduzieren.

Da die Kurve nach dem Ideal-Funktionsverlauf 50, wie auch nach dem Summenfunktionsverlauf 52 in seinen qualitativen Merkmalen, die bei dem Summenfunktionsverlauf 52 durch die Koeffizienten B und C beschrieben werden, aufgrund der Vorermittlungen bekannt ist, kann eine zu einem bestimmten Zeitpunkt mit allen Sensormeßwerten abgetastete momentane Kurve bzw. ein Ist-Funktionsverlauf dem Algorithmus zur Koeffizientenbestimmung zugeführt werden, der dann momentane Koeffizienten A, B und C für die momentane Kurve berechnet. Die momentanen Koeffizienten B und C sind nun Ist-Werte, die mit der Führungsgröße (bekannte Koeffizienten B und C) verglichen werden können, um eine Regelabweichung ausregeln zu können. Eine Bedienungsperson darf hier insoweit einwirken, als sie zulässige Abweichungen bekannter Koeffizienten B und C ändert, womit sie veränderte Prozeßzustände mehr oder weniger stark toleriert. Neben der nunmehr gegebenen Möglichkeit, die Kurve aus wenigen Stützstellen heraus abschätzen zu können, sind mit den Koeffizienten B und C wesentlich sensiblere Merkmale gegeben, als die meßfehlerbehaftete Verlustmessung, weshalb zeitlich eher als bei einer Verlustmessung, zielgerichtet eingegriffen und auf alle Qualitätsmerkmale der Reinigungsarbeit (Verlust, Reinheit, Überkehrbelastung) eingewirkt werden kann. Variabel bleibt somit der Koeffizient A, der rein durchsatzabhängig ist. Ist eine Abweichung der momentanen Funktion von der Ideal-Funktion nicht mehr über das Gebläse (oder den Siebspalt) beeinflußbar oder ist diese Art der Beeinflussung nicht gewünscht, dann kann eine, wenn auch etwas grobere Annäherung an die Ideal-Funktion, über eine Veränderung des Durchsatzes erfolgen.

Hierin liegt der wesentliche Unterschied zu herkömmlichen Regelsystemen, die zunächst und insbesondere absolut den Kornverlust ermitteln. Der Kornverlust ist jedoch nur von untergeordnetem Interesse, weil er nur begrenzt eine Aussage über die gegenwärtige Belastung der Erntemaschine 10 macht und die Messung des Kornverlustes stark fehlerbehaftet ist.

Nach dem erfindungsgemäßen Verfahren erfolgt ein ständiger Vergleich des optimalen und des gegenwärtigen Kurvenverlaufs, also des Ideal- und des Ist-Kurvenverlaufs über den Vergleich der rechnerisch, nach dem obigen Algorithmus, ermittelten Werte. Unter Kurvenverlauf ist die Gesamtheit der Meßwerte eines Bewertungszyklus zu verstehen, der sich in der einfachsten Form in der zweidimensionalen Darstellung einer Kurve in einem Diagramm darstellen läßt. Während der Berechnung der Regeldifferenz wird dieser Kurvenverlauf von verarbeitbaren Daten gebildet. In diesem Zusammenhang wären Kurve, Kurvenform, Kurvenverlauf und Funktion als gleichbedeutend anzusehen. Da sich eine Änderung des Parameters -A- nicht oder nicht substantiell auf die Eigentümlichkeit der Kurve bzw. der Funktion auswirkt, sondern nur auf deren Lage, kann sich bei einer Abweichung der Ist- von den Sollwerten eine Änderung mit einer Einflußnahme auf die Koeffizienten -B- und -C- beschränken. Da die Koeffizienten -B- und -C- jeder für sich, aber auch in einer mathematischen Beziehung untereinander, sei es als Produkt oder als Summe, in einer Abhängigkeit zu der Leistung des Gebläses 36 (bzw. des Arbeitsergebnisses in der Reinigung) stehen, können diese infolge einer Einflußnahme mittels eines Stellsignals des Rechners an den Gebläsevariator geändert und somit der Ist-Funktionsverlauf an den Ideal-Funktionsverlauf 50 angeglichen werden. Mittels eines kurz danach durchgeführten weiteren Vergleichs könnte festgestellt werden, ob die Änderung der Gebläseleistung nach ihrer Richtung zu dem geforderten Ergebnis geführt hat; dies ist allerdings nicht zwingend notwendig, da das Ergebnis des Soll-Ist-Vergleiches die Richtung - nicht den Betrag - der notwendigen Gebläseänderung beinhaltet. Diese Stellgröße nach einer Richtung bleibt solange aktiv bis das Gebläse 36 seine Drehzahl soweit verändert hat, daß sich im Ergebnis der Ist-Funktionsverlauf wieder dem Ideal-Funktionsverlauf 50 genähert hat - womit der Soll minus Ist-Vergleich Null zum Ergebnis hat, was dann "null" Richtung (also Ruhe) bedeutet. Damit entsteht eine Unabhängigkeit von der Verstellkennlinie des Gebläses 36; allerdings müssen in weiteren Algorithmen Sicherheitsabfragen gemacht werden, wenn der Regler keinen Anschlag kennt.

Aus dem Vergleich von Sollwert (aus dem die Führungsgröße abgeleitet wird) und Istwert (die wenn notwendig gewandelte Regelgröße) wird die Regelabweichung ($x_w$=Ist-Soll) gebildet. $X_w$ ist das Eingangsignal des Reglers, der eine Stellgröße bildet. Die Stellgröße ist der (wenn notwendig gewandelte und verstärkte) Eingriff in den Prozeß, damit der Regelkreis geschlossen wird.

Es wird darauf hingewiesen, daß es für verschiedene Durchsätze, gegebenenfalls auch für Meßfehler oder andere Einflüsse eine Schar von mathematischen Ideal-Funktionsverläufen 50 gleicher Form gibt, wobei ein Teil der Koeffizienten B, C der Schar an Ideal-Funktionssverläufen nur bzw. überwiegend die Form und nicht bzw. wenig den Durchsatz beschreibt. Dann gehört zu der Funktionsschar eine entsprechende Schar von Koeffizienten, die sich trennen lassen in variierende Koeffizienten für alle Funktionen und (fast) konstante Koeffizienten in allen Funktionen der Schar. Konstante Koeffizienten sind eine einmal bestimmte Maschinenkonstante, die über alle Bedingungen und Fruchtarten bei optimaler Arbeitsqualität gleich ist.

## Patentansprüche

1. Verfahren zur automatischen Regelung wenigstens eines Abschnitts der Gutbearbeitung in einer Erntemaschine (10) mit folgenden Verfahrensschritten:

    a) aus unter optimalen Abscheidebedingungen der Erntemaschine (10) erfaßten Meßwerten über den Abscheideverlauf wird ein mathematischer Ideal-Funktionsverlauf (50) gebildet;

    b) ein den Ideal-Funktionsverlauf (50) beschreibender Algorithmus mit wenigstens einem Koeffizienten (B,C) wird erstellt, wobei der Koeffizient (B,C) einer den Abscheideverlauf beeinflussenden Regelgröße zugeordnet wird;

    c) ein Rechenglied wird mit dem Algorithmus programmiert;

    d) während des Betriebs der Erntemaschine (10) werden Meßwerte über den Abscheideverlauf gebildet und als mathematischer Ist-Funktionsverlauf erfaßt;

    e) der Ist-Funktionsverlauf wird mit der Ideal-Funktionsverlauf verglichen;

    f) bei einer Abweichung des Ist-Funktionsverlaufs von dem Ideal-Funktionsverlauf (50) wird die die Koeffizienten (B, C) beeinflussende Regelgröße im Sinne einer Annäherung der Ist- an den Ideal-Funktionsverlauf (50) verändert.

2. Verfahren nach Anspruch 1, dadurch gekennzeichnet, daß der Ideal- und der Ist-Funktionsverlauf mit dem Funktionsansatz einer Summenfunktion erstellt werden.

3. Verfahren nach Anspruch 1 oder 2, gekennzeichnet durch den Ideal-Summenfunktionsverlauf 52:

$$Y=A*e^{(B*e^{(C*x)})}$$

4. Verfahren nach einem oder mehreren der vorherigen Ansprüche, dadurch gekennzeichnet, daß der Vergleich des Ideal- und des Ist-Funktionsverlaufs anhand deren Koeffizienten (B, C) mittels eines softwaregesteuerten Rechners erfolgt.

## Claims

1. A method for automatic regulation of at least one section of the crop processing in a harvesting machine (10), with the following method steps:

    a. a mathematically ideal function curve (50) is formed from measured values on the separation curve under optimum separation conditions of the harvesting machine (10);
    b. an algorithm, with at least one coefficient (B, C), describing the ideal function curve (50) is set up, wherein the coefficient (B, C) is associated with a control value affecting the separation curve;
    c. a computer unit is programmed with the algorithm;
    d. measured values on the separation curve are formed during the operation of the harvesting machine (10) and acquired as a mathematical actual function curve;
    e. the actual function curve is compared with the ideal function curve;
    f. on deviation of the actual function curve from the ideal function curve (50) the control value affecting the coefficients (B, C) is altered in the sense of approaching the actual to the ideal function curve (50).

2. A method according to claim 1, characterized in that the ideal and actual function curves are determined with the function statement of a summing function.

3. A method according to claim 1 or 2, characterized by the ideal function curve 52:

$$Y=A*e^{(B*e^{(C*x)})}$$

4. A method according to one or more of the preceding claims, characterized in that the comparison of the ideal and actual function curves is effected on the basis of their coefficients (B, C) by means of a software-controlled computer.

## Revendications

1. Procédé pour le réglage automatique d'au moins une partie du traitement d'une récolte dans une moissonneuse (10), comprenant les étapes opératoires suivantes :

    a) une courbe de fonction mathématique idéale (50) est formée à partir des valeurs de mesure détectées dans des conditions optimales de séparation dans la moissonneuse (10) en fonction de la courbe de séparation ;
    b) un algorithme, qui décrit la courbe de fonction idéale (50) avec au moins un coefficient (B, C), est établi, le coefficient (B,C) étant associé à une grandeur de régulation qui influe sur la courbe de séparation ;
    c) un circuit de calcul est programmé avec l'algorithme ;

d) pendant le fonctionnement de la moissonneuse (10), les valeurs de mesure de la courbe de séparation sont formées et sont détectées en tant que courbe mathématique de fonction réelle ;

e) la courbe de fonction réelle est comparée à la courbe de fonction idéale ;

f) lors d'un écart de la courbe de fonction réelle par rapport à la courbe de fonction idéale (50), la grandeur de régulation, qui influe sur les coefficients (B,C), est modifiée dans le sens d'une approximation de la courbe de fonction réelle sur la courbe de fonction idéale (50).

2. Procédé selon la revendication 1, caractérisé en ce que la courbe de fonction idéale et la courbe de fonction réelle sont établies avec la mise en oeuvre d'une fonction somme.

3. Procédé selon la revendication 1 ou 2, caractérisé par la courbe de fonction somme idéale (52) :

$$Y=A*e^{(B*e^{(C*x)})}$$

4. Procédé selon une ou plusieurs des revendications précédentes, caractérisé en ce que la comparaison de la courbe de fonction idéale et de la courbe de fonction réelle est réalisée sur la base de leurs coefficients (B,C) à l'aide d'un calculateur commandé par logiciel.

FIG.1

EP 0 728 409 B1

Fig. 2

Fig. 3

Koeffizient A = Asymptote ∼ Korndurchsatz

Koeffizienten B; C = Kriterium für Ideal-Funktionsverlauf

Von Sensoren gemessene Körner (Impulse)

Ansatz für Summenabscheidefunktion:

$$Y = A * e^{\left( B * e^{\left( C*X \right)} \right)}$$

52

50

Abscheidelänge (Lfd. Sensor-Nr.)

(Le)

Ende
Untersieb

Fig.4